# EUROPEAN PATENT SPECIFICATION

(11) **EP 0 781 678 B1**
(45) Date of publication and mention of the grant of the patent: **27.06.2001**
(21) Application number: 96120780.0
(22) Date of filing: 23.12.1996
(51) Int. Cl.: B60K 26/00, B60L 15/20

(54) **Control apparatus for vehicle**
Steuerung für ein Fahrzeug
Commande pour véhicule

(30) Priority: 28.12.1995 JP 34328195
(43) Date of publication of application: 02.07.1997
(73) Proprietor: AISIN AW CO., LTD., Anjo-shi Aichi-ken 444-11 (JP)
(72) Inventor: Kojima, Hiroyuki, Nishio-shi, Aichi-ken, 444-03 (JP); Kawamoto, Mutsumi, Nagoya-shi, Aichi-ken, 453 (JP)
(74) Representative: VOSSIUS & PARTNER

(56) References cited:
- DE-A- 4 305 054
- DE-A- 4 411 531
- DE-C- 4 409 080
- US-A- 5 123 389
- PATENT ABSTRACTS OF JAPAN vol. 13, no. 335 (M-856), 27 July 1989 -& JP 01 113531 A (MAZDA), 2 May 1989

## Description

The present invention relates to a control apparatus for a vehicle.

According to one of the conventionally employed vehicles loaded with a prime mover such as an engine or a motor and capable of traveling by being driven with the prime mover, an accelerator depressing amount is detected and an output of the prime mover is determined and controlled by a control device based on the detected accelerator depressing amount.

In this case, when the accelerator pedal is depressed, the accelerator depressing amount is detected by an accelerator sensor. Then, the control device subjects the accelerator depressing amount to analog/digital (A/D) conversion so as to obtain an accelerator operating amount, compares the accelerator operating amount with a zero point value for setting 0 point to adopt a difference therebetween as an accelerator instruction value, and refers to a map based on the accelerator instruction value or executes calculation to determine an output instruction value of the prime mover. As a result, the vehicle is capable of traveling at an output corresponding to the accelerator depressing amount.

However, if a driver operates a shift lever with his or her foot unconsciously placed on the accelerator pedal of the conventionally employed vehicle and changes the operation mode from neutral (N) to forward travel (D), the aforementioned accelerator operating amount increases by an amount induced by placing his or her foot on the accelerator pedal. On the other hand, because the zero point value is a fixed value, a difference between the accelerator operating amount and the zero point value increases. Thus, the accelerator instruction value increases correspondingly so that the output of the prime mover also increases.

As a result, the vehicle travels at an output different from the output expected by the driver, thereby deteriorating traveling comfort.

JP-A-1 113 531 discloses a control apparatus according to the preamble of claim 1.

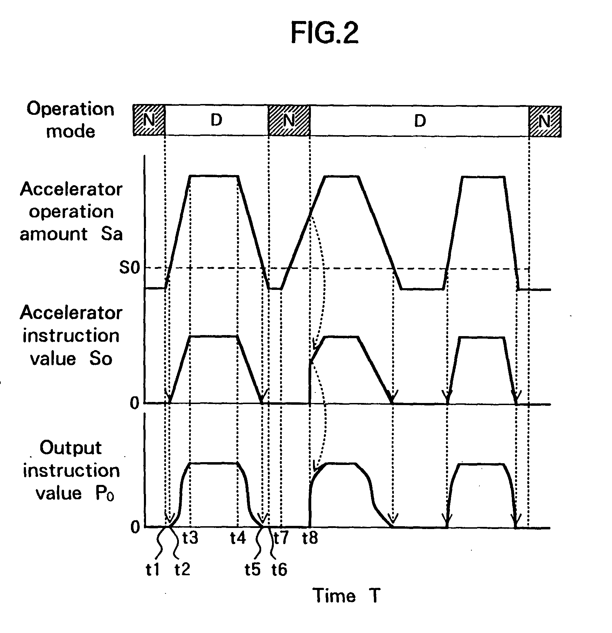

Fig. 2 is a time chart of this conventional vehicle. It is assumed in this figure that the axis of abscissa represents time T and the axis of ordinate represents accelerator operating amount Sa, accelerator instruction value So, and output instruction value P₀. N indicates that the operation mode is neutral and D indicates that the operation mode is forward traveling.

As shown in this figure, when the driver operates the shift lever (not shown) to change the operation mode from neutral to forward traveling at the timing t1 and starts depressing the accelerator pedal (not shown), the accelerator operating amount Sa increases in proportion to the increase in an accelerator depressing amount. However, while the accelerator operating amount Sa is smaller than the zero point value S0, the accelerator instruction value So is 0 and consequently the output instruction value P₀ is also 0.

Then, after the accelerator operating amount Sa has become equal to the zero point value S0 at the timing t2, the accelerator instruction value So increases in proportion to the increase in the accelerator operating amount Sa and the output instruction value P₀ also increases correspondingly. The output instruction value P₀ is determined by the accelerator instruction value So and a predetermined equation or a map. In this case, the gradient of the output instruction value P₀ is set to a small value in order to avoid the occurrence of shock caused by the abrupt rise in the output instruction value P₀.

Then, when the accelerator operating amount Sa becomes constant at the timing t3, the accelerator instruction value So and the output instruction value P₀ also become constant. The output instruction value P₀ is determined by the accelerator instruction value So and the predetermined equation or the map. In this case, the gradient of the output instruction value P₀ is set to a small value in order to avoid the occurrence of shock which might be caused if the output instruction value P₀ becomes constant abruptly.

Subsequently, when the driver begins to release the accelerator pedal at the timing t4, the accelerator operating amount Sa decreases in proportion to the decrease in the accelerator depressing amount, and the accelerator instruction value So and the output instruction value P₀ also decrease correspondingly. The output instruction value P₀ is determined by the accelerator instruction value So and the predetermined equation or-the map. In this case, the gradient of the output instruction value P₀ is set to a small value in order to avoid the occurrence of shock caused by the abrupt decrease in the output instruction value P₀.

Then, after the accelerator operating amount Sa has become equal to the zero point value S0 at the timing t5, the accelerator instruction value So is 0 and the output instruction value P₀ is also 0, as long as the accelerator operating amount Sa is smaller than the zero point value S0. The output instruction value P₀ is determined by the accelerator instruction value So and the predetermined equation or the map. In this case, the gradient of the output instruction value P₀ is set to a small value in order to avoid the occurrence of shock which might be caused if the output instruction value P₀ reaches 0 abruptly.

Then, when the driver operates the shift lever to change the operation mode from forward traveling to neutral at the timing t6 and releases the accelerator pedal completely to bring the accelerator operating amount down to 0, the accelerator instruction value So and the output instruction value P₀ are maintained at 0.

Then, when the driver begins to depress the accelerator pedal at the timing t7, the accelerator operating amount Sa increases in proportion to the increase in the accelerator pedal depressing amount. However, even if the accelerator operating amount Sa becomes larger than the zero point value S0, the accelerator instruction value So and the output instruction value P₀ are maintained at 0 unconditionally, as long as the selected operation mode is neutral.

Subsequently, when the driver operates the shift lever to change the operation mode from neutral to forward traveling at the timing t8, a difference between the accelerator operating amount Sa and the zero point value S0 at the timing t8 corresponds to the accelerator instruction value So, because the accelerator pedal has been depressed already. Thus, the output instruction value P₀ also increases in proportion to the increase in the accelerator instruction value So.

If the selected operation mode is forward traveling when the accelerator operating amount Sa is larger than the zero point value S0, the accelerator instruction value So and the output instruction value P₀ increase in proportion to the accelerator operating amount Sa.

As described above, while the selected operation mode is neutral, even if the accelerator pedal is depressed by the driver, the accelerator instruction value So and the output instruction value P₀ are maintained at 0 unconditionally. After that, when the selected operation mode is forward traveling, the accelerator instruction value So and the output instruction value P₀ respectively correspond to the accelerator operating amount Sa.

Thus, if the driver operates the shift lever to change the operation mode from neutral to forward traveling with his or her foot unconsciously placed on the accelerator pedal, the aforementioned accelerator operating amount Sa increases by an amount induced by placing his or her foot on the accelerator pedal. However, because the zero point value S0 is a fixed value, a difference between the accelerator operating amount Sa and the zero point value S0 increases. Thus, the accelerator instruction value So and the output instruction value P₀ increase correspondingly.

As a result, the vehicle travels at an output different from the output expected by the driver, thereby deteriorating traveling comfort.

DE-A-4 411 531 discloses an apparatus controlling the operation of an engine of a vehicle, wherein the zero point value is set to the accelerator operating amount when the ignition switch is operated.

An object of the present invention is to solve the above-mentioned problem in the control apparatus of a conventional vehicle and provide a control apparatus for a vehicle which is able to prevent traveling comfort from deteriorating. These objects are solved with the features of claim 1.

If the driver operates the operation mode selecting device to select the operation mode and then operates the accelerator operating device, the operation mode detecting means detects the operation mode and the accelerator operating amount detecting means detects the accelerator operating amount.

The accelerator instruction value determining means sets the accelerator instruction value to 0 unconditionally when the non-travel mode is selected , and determines the accelerator instruction value based on a difference between the accelerator operating amount detected by the accelerator operating amount detecting means and the zero point value when the travel mode is selected.

If the driver operates the operation mode selecting device to change the operation mode from the non-travel mode to the travel mode, the zero point value setting means sets the zero point value corresponding to the accelerator operating amount.

Thus, even if the accelerator operating amount is large when the operation mode is changed from the non-travel mode to the travel mode, it is possible to reduce a difference between the accelerator operating amount and the zero point value. Thus, it is possible to drive the vehicle at an output expected by the driver. Consequently, traveling comfort is enhanced significantly.

If the accelerator operating amount is increased when the selected operation mode is the non-travel mode, the zero point value is also increased (See claim 2). Then, if the operation mode is changed to the travel mode while the accelerator operating amount is large, the accelerator operating amount becomes smaller than the zero point value only for a specific period of time. Thus, the accelerator instruction value can be set to 0.

Therefore, it is possible to prevent a driving source from being driven upon transition of the operation mode from the non-travel mode to the travel mode.

Furthermore, after that, because the zero point value is maintained at a value obtained at that time, if the accelerator operating amount is increased, the accelerator instruction value can be increased correspondingly.

Consequently, the vehicle is able to travel exactly at an output expected by the driver.

When the sum of the accelerator operating amount and the play becomes smaller than the zero point value, the zero point value can be decreased corresponding to the accelerator operating amount (see claim 3).

Thus, if the driver sets the accelerator pedal depressing amount to 0 while the selected operation mode is the travel mode and then increases the accelerator pedal depressing amount again, the zero point value is maintained at its regular value, so that the accelerator instruction value can be defined as a difference between the accelerator pedal depressing amount and the regular zero point value.

In case of the features of claim 4, the vehicle is able to travel at the output expected by the driver, which greatly improves traveling comfort.

Hereinafter, embodiments of the present invention will be described in detail with reference to the accompanying drawings.

Fig. 1 is a block diagram of a control apparatus for a vehicle according to an embodiment of the present invention.

Fig. 2 is a time chart of a conventional vehicle.

Fig. 3 is a schematic diagram of a control apparatus of a vehicle according to the embodiment of the present invention.

Fig. 4 is a main flow chart showing the operation of the control apparatus of a vehicle according to the embodiment of the present invention.

Fig. 5 is a flow chart showing the subroutine of an operation mode determining process according to the embodiment of the present invention.

Fig. 6 is a flow chart showing the subroutine of an accelerator instruction value determining process according to the embodiment of the present invention.

Fig. 7 is a diagram showing an accelerator instruction value map according to the embodiment of the present invention.

Fig. 8 is a diagram showing an output instruction value map according to the embodiment of the present invention.

Fig. 9 is a time chart of a vehicle according to the embodiment of the present invention.

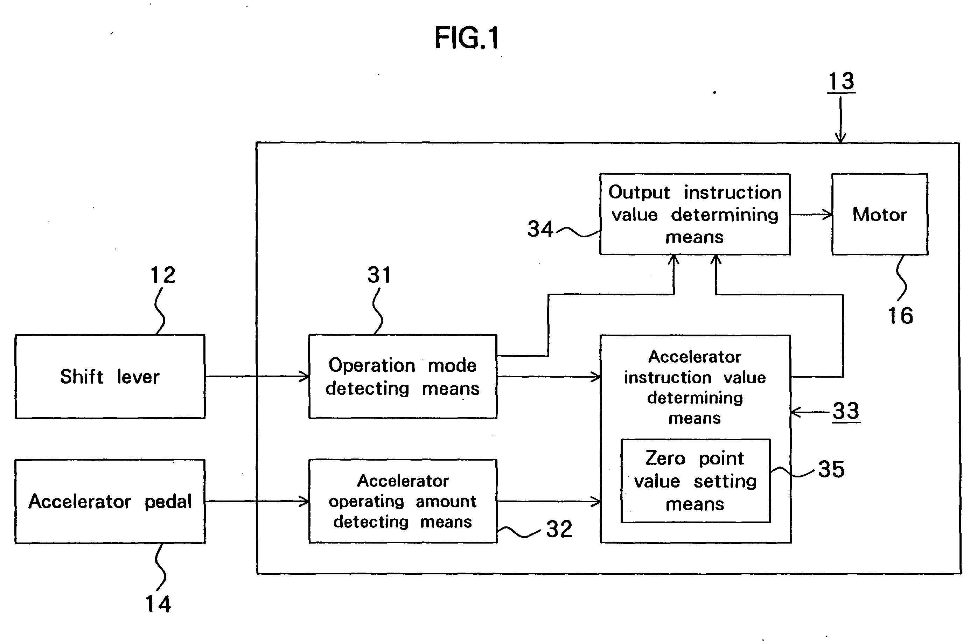

Fig. 1 is a functional block diagram of a control apparatus for a vehicle according to an embodiment of the present invention.

As shown in the figure, a shift lever, which serves as an operation mode selecting device, is denoted by reference numeral 12. The shift lever 12 allows the operation mode comprising travel mode and non-travel mode to be selected. A CPU is denoted by numeral 13, an accelerator pedal serving as an accelerator operating device by 14, and a motor as a prime mover by 16.

The aforementioned CPU 13 comprises operation mode detecting means 31 for detecting the operation mode selected by the shift lever 12, accelerator operating amount detecting means 32 for detecting the amount of accelerator operation by the accelerator pedal 14, accelerator instruction value determining means 33 for setting an accelerator instruction value to 0 when the non-travel mode is selected and determining the accelerator instruction value based on a difference between an accelerator operating amount detected by the accelerator operating amount detecting means 32 and zero point value when the travel mode is selected, and output instruction value determining means 34 for determining an output instruction value of a motor 16 based on the operation mode selected by the shift lever 12 and the accelerator instruction value determined by the accelerator instruction value determining means 33.

The accelerator instruction value determining means 33 includes zero point value setting means 35 for setting the aforementioned zero point value in accordance with the accelerator operating amount when the operation mode is changed from the non-travel mode to the travel mode.

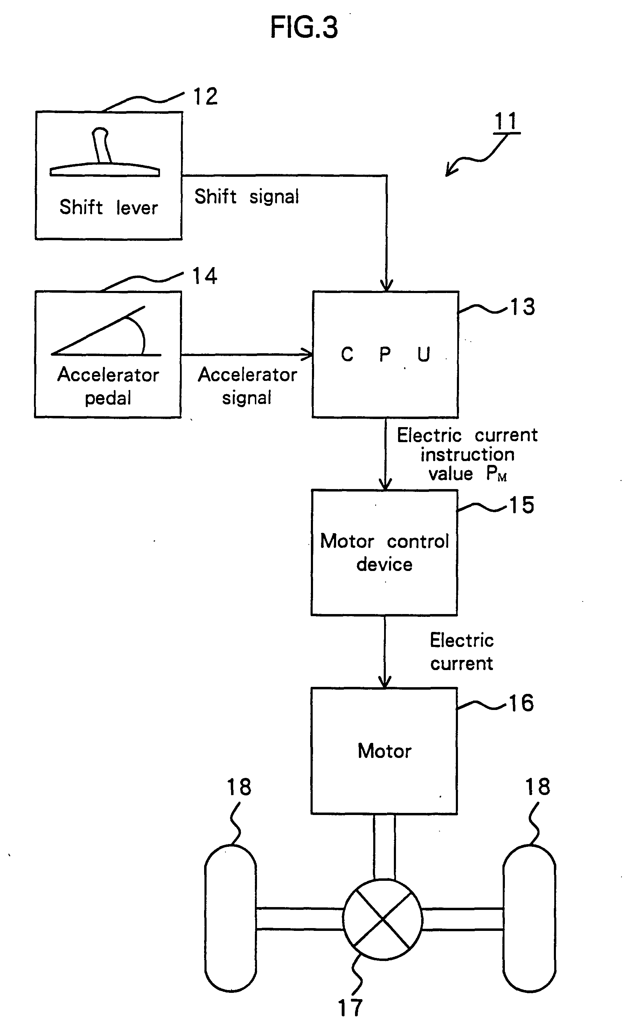

Fig. 3 is a schematic diagram of a control apparatus for a vehicle according to an embodiment of the present invention.

As shown in this figure, a vehicle as an electric vehicle is denoted by numeral 11 and the shift lever for selecting the operation mode is denoted by 12. According to this embodiment, the shift lever 12 is operated to allow respective operation modes comprising the non-travel mode including parking (P) and neutral and the travel mode including backward traveling (R) and forward traveling to be selected. A shift signal corresponding to the selected operation mode is generated by the shift lever 12 and outputted to the CPU 13.

An accelerator pedal is denoted by reference numeral 14. When the accelerator pedal 14 is depressed, an accelerator signal corresponding to the accelerator operating amount Sa is generated by the accelerator pedal 14 and outputted to the CPU 13.

The CPU 13 controls the entire control apparatus of the electric vehicle 11 according to a system control program, generates an electric instruction value P_{M} as an output instruction value P₀ based on the selected operation mode and the accelerator operating amount Sa upon receiving the shift and accelerator signals, and outputs the electric instruction value P_{M} to a motor control device. Upon receiving the electric instruction value P_{M}, the motor control device 15 supplies an electric current corresponding to the electric instruction value P_{M} to the motor as a prime mover.

Revolutions generated by the motor 16 are transmitted to a differential unit 17, differentiated by the differential unit 17, and transmitted to driven wheels 18.

Although the motor 16 is used as the prime mover in this embodiment, the motor 16 may be replaced by an internal combustion engine. In this case, the CPU 13 generates an instruction value of a throttle opening degree as the output instruction value P₀ and outputs the instruction value of the throttle opening degree to an engine control device, which is not shown. Furthermore, this embodiment can be applied to a vehicle equipped with a prime mover comprising an engine combined with the motor 16.

In the case where the engine is employed as a prime mover thereof, if a driver leaves his or her foot placed on the accelerator pedal unconsciously when the operation mode is neutral, the driver can easily recognize that his or her foot is placed on the accelerator pedal from fluctuations in acoustic intensity, vibration, or the like induced by the increase in engine revolutions. On the other hand, in the case where the motor 16 is employed as a prime mover of a vehicle, the output of the motor 16 is not generated when the operation mode is neutral. Thus, the driver sometimes does not recognize that his or her foot is placed on the accelerator pedal.

Consequently, when the operation mode is switched to forward traveling or backward traveling, the vehicle travels at an output different from the expected output, thereby deteriorating traveling comfort.

Next, the operation of the control apparatus of the electric vehicle having the aforementioned construction will be described.

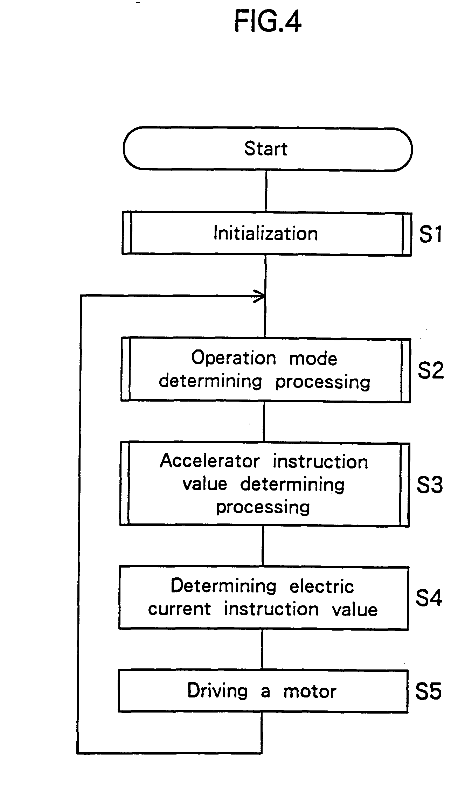

Fig. 4 is a main flow chart showing the operation of the control apparatus of the vehicle according to the embodiment of the present invention.

First, the CPU 13 (Fig. 3) determines which operation mode is selected in response to the shift signal from the shift lever 12 after the system has been initialized. Subsequently, the CPU 13 detects the accelerator operating amount Sa and then determines the accelerator instruction value So based on the accelerator operating amount Sa.

Then the CPU 13 determines the electric current instruction value P_{M}, which is outputted to the motor control device 15.

The motor control device 15 supplies a current corresponding to the electric current instruction value P_{M} to the motor 16 so as to drive the motor 16.
In step S1, the system is initialized.
In step S2, which operation mode is selected is determined, the operation mode selected by operation g the shift lever 12 is detected, and whether or not the operation mode has been changed is determined.
In step S3, the accelerator instruction value determining means 33 (Fig. 1) executes the step of determining the accelerator instruction value, and the accelerator instruction value So is determined based on the accelerator operating amount Sa.
In step S4, the output instruction value determining means 34 determines the electric current instruction value P_{M} based on the operation mode and the accelerator instruction value So.
In step S5, the motor control device 15 supplies a current corresponding to the electric current instruction value P_{M} to the motor 16 so as to drive the motor 16.

According to the present embodiment, even if the operation mode is changed from the non-travel mode to the travel mode, for instance, from parking to reverse, neutral to reverse, neutral to drive or the like, while the accelerator pedal 14 is depressed, it is possible to prevent the electric vehicle 11 from being driven at an output different from the output expected by the driver.

Thus, if the shift lever 12 is operated and the selected operation mode is the non-travel mode, the accelerator instruction value S₀ is set to 0 regardless of the accelerator operating amount Sa.

If the operation mode is changed from the non-travel mode to the travel mode, the sum of the accelerator operating amount Sa at the time when the operation mode is changed to the travel mode and a play Sc is determined to be zero point value S0.

Thus, immediately after the operation mode has been changed from the non-travel mode to the travel mode, the accelerator instruction value So is set to 0 regardless of the condition of the accelerator pedal 14. After that, only when the accelerator pedal 14 is depressed further, the accelerator instruction value So takes a value different from 0.

Even if the operation mode is changed from the travel mode to the non-travel mode with the accelerator pedal 14 depressed, when the sum of the accelerator operating amount Sa and the play Sc becomes less than the zero point value S0 by loosening the accelerator pedal 14, the sum of the accelerator operating amount Sa and the play Sc is set as a new zero point value S0.

Next, a subroutine for the process of determining the operation mode in STEP 2 in Fig. 4 will be described.

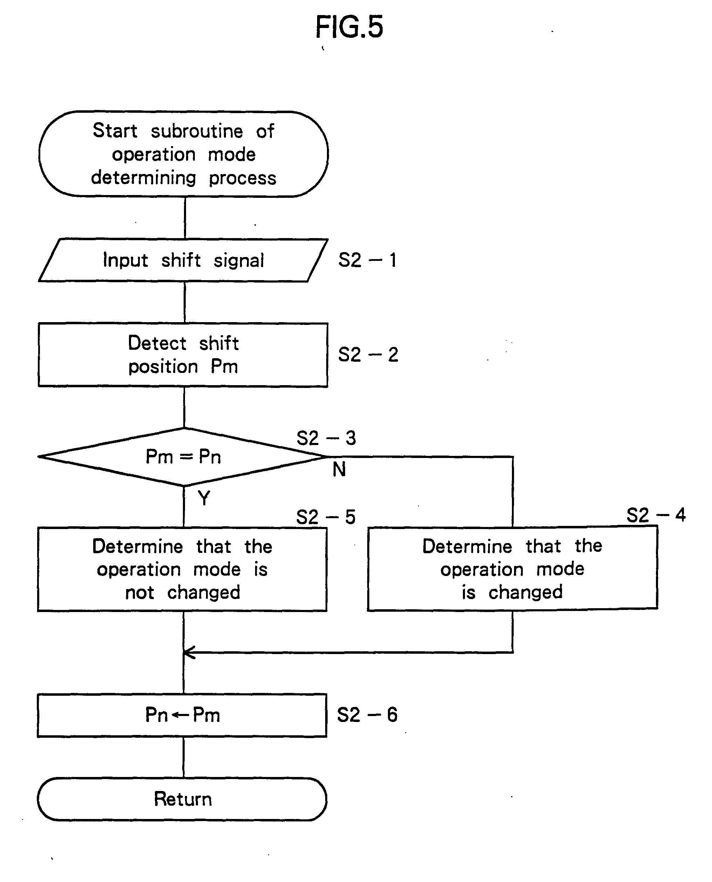

Fig. 5 is a flow chart showing the subroutine of the process of determining the operation mode according to the embodiment of the present invention.

In this case, if a shift signal is inputted from the shift lever 12, the operation mode detecting means 31 detects a shift position Pm in response to the shift signal and detects the operation mode based on the shift position Pm. Subsequently, by comparing a current shift position Pm with a shift position Pn detected last time, whether or not the operation mode has been changed is determined. Thus, the shift position Pn detected last time is stored in a buffer (not shown) within the CPU 13.
In step S2-1, a shift signal generated by the shift lever 12 is inputted to the CPU 13.
In step S2-2, the operation mode detecting means 31 of the CPU 13 detects the selected operation mode according to the current shift position Pm.
In step S2-3, whether or not the current shift position Pm is the same as the shift position Pn detected last time is determined. If the current shift position Pm is the same as the shift position Pn detected last time, the program proceeds to step S2-5.
   Otherwise, the program proceeds to step S2-4.
In step S2-4, it is determined that the operation mode has been changed.
In step S2-5, it is determined that the operation mode has not been changed.
In step S2-6, it is assumed that the current shift position Pm is the shift position detected last time.

Next, the subroutine for the process of determining the accelerator instruction value in step S3 in Fig. 4 will be explained.

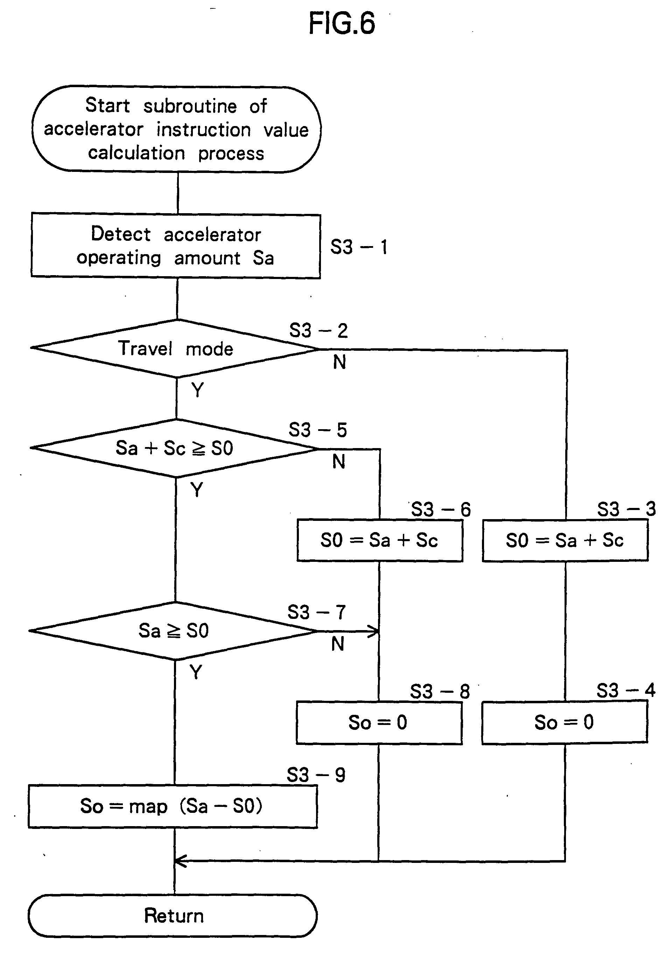

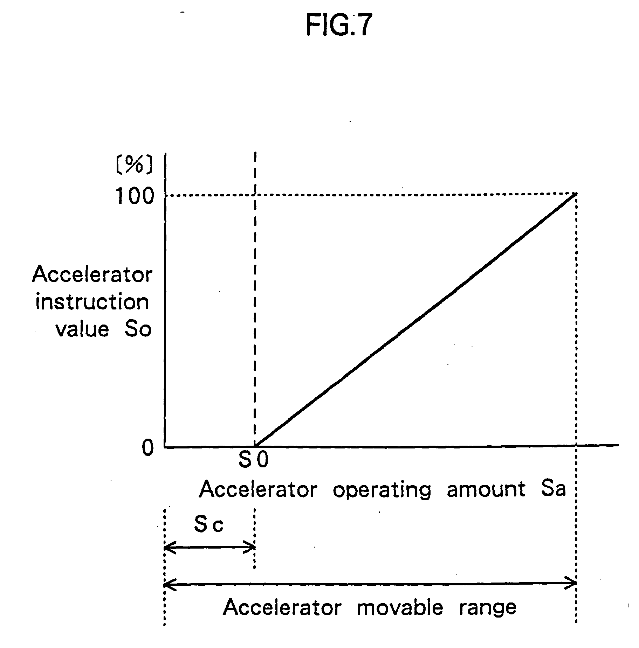

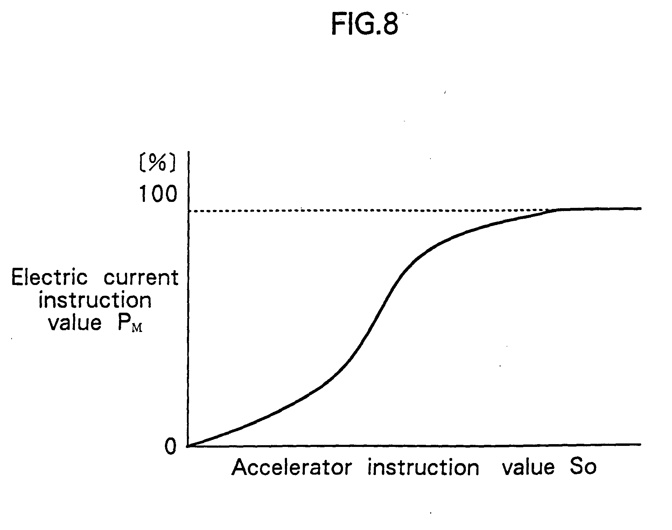

Fig. 6 is a flow chart showing the subroutine of the process of determining the accelerator instruction value according to the embodiment of the present invention. Fig. 7 is a diagram showing an accelerator instruction value map according to the embodiment of the present invention. Fig. 8 is a diagram showing an output instruction value map according to the embodiment of the present invention. In Fig. 7, the axis of abscissa represents the accelerator operating amount Sa and the axis of ordinate represents the accelerator instruction value So. In Fig. 8, the axis of abscissa represents the accelerator instruction value So and the axis of ordinate represents the electric current instruction value P_{M} as the output instruction value P₀.

First, upon receiving an accelerator signal generated by the accelerator pedal 14, the CPU 13 (Fig. 3) detects an accelerator pedal depressing amount based on the accelerator signal and subjects the accelerator pedal depressing amount to analog/digital (A/D) conversion so as to detect the accelerator operating amount Sa.

Then, whether the operation mode determined by the CPU 13 is the non-travel mode such as parking or neutral or the travel mode such as backward traveling or forward traveling is determined.

Then, if the operation mode is the non-travel mode, it is assumed that the sum of the accelerator operating amount Sa and the play Sc is the zero point value SO. Also, the accelerator instruction value So in the non-travel mode is set to 0.

When the operation mode is the travel mode, if the accelerator operating amount Sa is smaller than the zero point value S0 as a result of comparing the accelerator operating amount Sa with the zero point value S0, the accelerator instruction value is set to 0. Furthermore, if the sum of the accelerator operating amount Sa and the play Sc is smaller than the zero point value S0, it is determined that the zero point has shifted. Then, the zero point value S0 is changed to the sum of the accelerator operating amount Sa and the play Sc.

Only when the accelerator operating amount Sa is larger than the zero point value S0 within an accelerator operating range, with reference to the accelerator instruction map as shown in Fig. 7 or based on a predetermined equation, the accelerator instruction value So is determined.

Next, the CPU 13 determines the current instruction value P_{M} based on the aforementioned accelerator instruction value So referring to the torque instruction value map as shown in Fig. 8. In this case, the gradient of the electric current instruction value P_{M} is set to a small value over the ranges in which the accelerator instruction value So is small or large, in order to avoid the occurrence of shock which might be caused if the electric current instruction value P_{M} rises or becomes constant abruptly.

The determined electric current instruction value P_{N} is compared with a restrictive value such as the temperature of the motor 16 and those of the other conditions by an output determining section (not shown) of the CPU 13. After that, the instruction value P_{M} is outputted from an output (not shown) to the motor control device 15.
In step S3-1, the accelerator operation amount detecting means 32 (Fig. 1) detects the accelerator operating amount Sa.
In step S3-2, whether or not the operation mode is the travel mode is determined. If the travel mode is selected, the program proceeds to step S3-5. If the travel mode is not selected, namely, the non-travel mode is selected, the program proceeds to step S3-5.
In step S3-3, the zero point value setting means 35 of the accelerator instruction value determining means 33 defines the sum of the accelerator operating amount Sa and the play Sc as the zero point value S0.
In step S3-4, the accelerator instruction value So is set to 0 and the program is returned to the initial step.
In step S3-5, whether or not the sum of the accelerator operating amount Sa and the play Sc is larger than the zero point value SO is determined. If the sum of the accelerator operating amount Sa and the play Sc is larger than the zero point value SO, the program proceeds to step s3-7. If the sum of the accelerator operating amount Sa and the play Sc is smaller than the zero point value S0, the program proceeds to step S3-6.
In step S3-6, the zero point value setting means 35 of the accelerator instruction value determining means 33 defines the sum of the accelerator operating amount Sa and the play Sc as the zero point value S0.
In step S3-7, whether or not the accelerator operating amount Sa is larger than the zero point value S0 is determined. If the accelerator operating amount Sa is larger than the zero point value S0, the program proceeds to step S3-9. If the accelerator operating amount Sa is smaller than the zero point value S0, the program proceeds to step S3-8.
In step S3-8, the accelerator instruction value So is set to 0 and the program is returned to the initial step.
In step S3-9, the accelerator instruction value So is determined based on the accelerator operating amount Sa and the zero point value S0 with reference to the accelerator instruction value map, and then the program is returned to the initial step.

Next, a time chart of the vehicle according to this embodiment will be described.

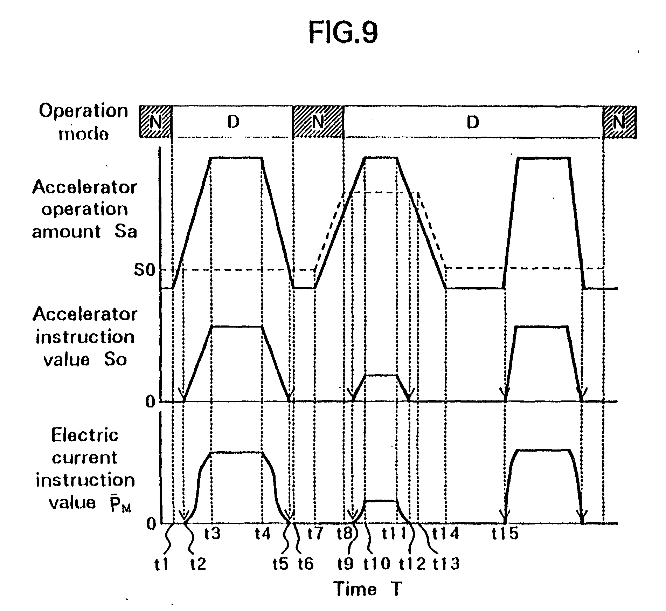

Fig. 9 is a time chart of the vehicle according to the embodiment of the present invention. As shown in this figure, the axis of abscissa represents time T and the axis of ordinate represents the accelerator operating amount Sa, the accelerator instruction value So and the electric current instruction value P_{M}. N indicates that the operation mode is neutral and D indicates that the operation mode is forward traveling.

If the driver operates the shift lever 12 (Fig. 3) at the timing tl to change the operation mode from neutral to forward traveling and starts depressing the accelerator pedal 14, as shown in this figure, the accelerator operating amount Sa increases in proportion to the increase in the accelerator depressing amount. However, because the operation mode is changed from the non-travel mode to the travel mode, the sum of the accelerator operating amount Sa at the time when the operation mode is changed to the travel mode and the play Sc is defined as the zero point value S0.

Then, while the accelerator operating amount Sa is smaller than the zero point value S0, the accelerator instruction value So is 0. As a result, the electric current instruction value P_{M} is also 0.

Then, if the sum of the accelerator operating amount Sa and the play Sc becomes larger than the sum of the zero point value S0 and the play Sc at the timing t2, the accelerator instruction value So increases in proportion to the increase in the accelerator operating amount Sa, and the electric current instruction value P_{M} also increases. The electric current instruction value P_{M} is determined by the accelerator instruction value So and a predetermined equation or a map. In this case, the gradient of the electric current instruction value P_{M} is set to a small value in order to avoid the occurrence of shock caused by the abrupt rise in the electric current instruction value P_{M}.

Next, if the accelerator operating amount Sa becomes constant at the timing t3, the accelerator instruction value So and the electric current instruction value P_{M} also become constant. The electric current instruction value P_{M} is determined by the accelerator instruction value So and the predetermined equation or the map. In this case, the gradient of the electric current instruction value P_{M} is set to a small value in order to avoid the occurrence of shock, which might be caused if the electric current instruction value P_{M} becomes constant abruptly.

Subsequently, if the driver starts releasing the accelerator pedal 14 at the timing t4, the accelerator operating amount Sa decreases in proportion to the decrease in the accelerator pedal depressing amount. The accelerator instruction value So also decreases correspondingly and the electric current instruction value P_{M} also decreases. The electric current instruction value P_{M} is determined by the accelerator instruction value So and the predetermined equation or the map. The gradient of the electric current instruction value P_{M} is set to a small value in order to avoid the occurrence of shock caused by the abrupt decrease in the electric current instruction value P_{M}.

If the sum of the accelerator operating amount Sa and the play Sc becomes smaller than the sum of the zero point value S0 and the play Sc at the timing t5, the accelerator instruction value So and the current instruction value P_{M} become 0. The electric current instruction value P_{M} is determined by the accelerator instruction value So and the predetermined equation or the map. In this case, the gradient of the electric current instruction value P_{M} is set to a small value in order to avoid the occurrence of shock, which might be caused if the electric current instruction value P_{M} becomes 0 abruptly.

Next, when the driver operates the shift lever 12 to change the operation mode from forward traveling to neutral and releases the accelerator pedal completely, the operation mode is changed from the travel mode to the non-travel mode. Thus, the sum of the accelerator operating amount Sa and the play Sc is defined as the zero point value S0. In addition, because the operation mode is the non-travel mode, the accelerator instruction value So and the electric current instruction value P_{M} are set to 0 unconditionally.

Then, when the driver starts depressing the accelerator pedal 14 again at the timing t7, the accelerator operating amount Sa increases in proportion to the increase in the accelerator pedal depressing amount. Consequently, the zero point value S0 increases also in proportion to the accelerator operating amount Sa. Because the operation mode is the non-travel mode in the meantime, the accelerator instruction value So and the electric current instruction value P_{M} are set to 0 unconditionally.

Subsequently, when the driver operates the shift lever 12 to change the operation mode from neutral to forward traveling at the timing t8, the operation mode is changed from the non-travel mode to the travel mode. Thus, the sum of the accelerator operating amount Sa at the time when the operation mode is changed to the non-travel mode and the play Sc is defined as the zero point value S0. Then, while the sum of the accelerator operating amount Sa and the play Sc remains smaller than the sum of the zero point value S0 and the play Sc, the accelerator instruction value So and the electric current instruction value P_{M} are set to 0.

In this case, the accelerator pedal 14 has been already depressed while the operation mode is the non-travel mode. However, even after the operation mode has been changed from the non-travel mode to the travel mode, the accelerator instruction value So and the electric current instruction value P_{M} are set to 0 until the pedal is depressed further by an amount of the play Sc.

Thus, the motor 16 can be prevented from being driven upon transition of the operation mode from the non-travel mode to the travel mode. Therefore, it is possible to drive the vehicle at an output expected by the driver.

Next, when the accelerator operating amount Sa exceeds the zero point value S0 at the timing t9, a difference between the accelerator operating amount Sa and the zero point value S0 is defined as the accelerator instruction value So. Thus, after that, the accelerator instruction value So and the electric current instruction value P_{M} increase in proportion to the increase in the accelerator operating amount. The electric current instruction value P_{M} is determined by the accelerator instruction value So and the predetermined equation or the map. In this case, the gradient of the electric current instruction value P_{M} is set to a small value in order to avoid the occurrence of shock caused by the abrupt rise in the electric current instruction value P_{M}.

As described above, because the zero point value S0 is maintained at a value obtained at the time when the operation mode has been changed from the non-travel mode to the travel mode, the accelerator instruction value So and the electric current instruction value P_{M} can be increased correspondingly by increasing the accelerator operating amount Sa. Therefore, it is possible to drive the vehicle at an output expected by the driver.

Then, when the accelerator operating amount Sa becomes constant at the timing t10, the accelerator instruction value So and the electric current instruction value P_{M} also become constant. Furthermore, the electric current instruction value P_{M} is determined by the accelerator instruction value So and the predetermined equation or the map. In this case, the gradient of the electric current instruction value P_{M} is set to a small value in order to avoid the occurrence of shock which might be caused if the electric current instruction value P_{M} becomes constant abruptly.

Subsequently, when the driver starts releasing the accelerator pedal 14 at the timing t11, the accelerator operating amount Sa decreases in proportion to the decrease in the accelerator pedal depressing amount. At this time, the accelerator instruction value So decreases correspondingly, and the electric current instruction value P_{M} also decreases. The electric current instruction value P_{M} is determined by the accelerator instruction value So and the predetermined equation or the map. In this case, the gradient of the electric current instruction value P_{M} is set to a small value in order to avoid the occurrence of shock caused by the abrupt decrease in the electric current instruction value P_{M}.

When the accelerator operating amount Sa becomes smaller than the zero point value S0 at the timing t12, the accelerator instruction value So and the electric current instruction value P_{M} also become 0. The electric current instruction value P_{M} is determined by the accelerator instruction value So and the predetermined equation or the map. In this case, the gradient of the electric current instruction value P_{M} is set to a small value in order to avoid the occurrence of shock which might be caused if the electric current instruction value P_{M} becomes 0 abruptly.

Furthermore, when the sum of the accelerator operating amount Sa and the play Sc becomes smaller than the sum of the zero point value S0 and the play Sc at the timing t13, the sum of the accelerator operating amount Sa and the play Sc is defined as the zero point value S0. In this case, if the accelerator operating amount Sa is changed, the zero point value S0 is changed correspondingly. In the meantime, the accelerator instruction value So and the electric current instruction value P_{M} become 0.

As described above, when the sum of the accelerator operating amount Sa and the play Sc becomes smaller than the sum of the zero point value S0 and the play Sc, the aforementioned zero point value S0 can be decreased corresponding to the accelerator operating amount Sa.

Thus, when the driver increases the accelerator pedal depressing amount while the operation mode is the travel mode, it is possible to increase the accelerator instruction value So and the electric current instruction value P_{M} correspondingly by increasing the accelerator operating amount Sa.

When the accelerator operating amount Sa becomes constant at the timing t14, the zero point value S0 becomes constant correspondingly.

Then, if the sum of the accelerator operating amount Sa and the play Sc becomes larger than the sum of the zero point value S0 and the play Sc at the timing t15, the accelerator instruction value So increases in proportion to the increase in the accelerator operating amount Sa. The electric current instruction value P_{M} also increases correspondingly. The electric current instruction value P_{M} is determined by the accelerator instruction value So and the predetermined equation or the map. In this case, the gradient of the electric current instruction value P_{M} is set to a small value in order to avoid the occurrence of shock caused by the abrupt rise in the electric current instruction value P_{M}. Then, because the sum of the accelerator operating amount Sa and the play Sc becomes larger than the sum of the zero point value S0 and the play Sc, the zero point value S0 is not changed even if the accelerator operating amount Sa is changed.

As described above, while the selected operation mode is the non-travel mode, even if the accelerator pedal 14 is depressed, the accelerator instruction value So and the electric current instruction value P_{M} are set to 0 unconditionally. After that, even if the accelerator pedal 14 is depressed at the time when the travel mode has been selected, the accelerator instruction value So and the electric current instruction value P_{M} are maintained at 0. If the driver further depresses the accelerator pedal 14, the accelerator instruction value So and the electric current instruction value P_{M} take values other than 0.

Furthermore, at this time, the accelerator instruction value So and the electric current instruction value P_{M} do not correspond to the accelerator operating amount Sa, but are determined based on a difference between the accelerator operating amount Sa and the zero point value S0 which increases in proportion to the accelerator operating amount Sa.

Thus, it is possible to drive the vehicle at an output expected by the driver, thereby preventing deterioration of traveling comfort.

## Claims

1. A control apparatus for a vehicle, comprising:
a shift lever (12) for selecting an operation mode comprising travel mode and non-travel mode; an accelerator operating device (14); operation mode detecting means (31) for detecting the operation mode selected by said shift lever (12); accelerator operating amount detecting means (32) for detecting an accelerator operating amount by said accelerator operating device; accelerator instruction value determining means (33) for determining the accelerator instruction value based on a difference between the accelerator operating amount detected by said accelerator operating amount detecting means (32) and a zero point value when the travel mode is selected; and output instruction value determining means (34) for determining an output instruction value of a prime mover based on the accelerator instruction value determined by said accelerator instruction value determining means (33),
characterized in that said accelerator instruction value determining means (33) includes zero point value setting means (35) for setting said zero point value in accordance with said accelerator operating amount when the operation mode is changed from the non-travel mode to the travel mode.

2. An apparatus according to claim 1, wherein said zero point value setting means (35) sets the zero point value to the sum of the accelerator operating amount and a play thereof when the selected operation mode is the non-travel mode, and when the operation mode is changed from the non-travel mode to the travel mode, maintains the zero point value at the value obtained.

3. An apparatus according to claim 1 or 2, wherein said zero point value setting means (35) sets the zero point value in accordance with said accelerator operating amount when the selected operation mode is the travel mode and the sum of the accelerator operating amount and the play becomes smaller than the zero point value.

4. An apparatus according to claim 1, 2, or 3, wherein said prime mover is a motor and said output instruction value determining means (34) determines an electric current instruction value of said motor based on the operation mode selected by said shift lever (12) and the accelerator instruction value determined by said accelerator instruction value determining means (33).

5. An apparatus according to any one of claims 2 to 4, wherein the accelerator instruction value determining means (33) is adapted for setting unconditionally an accelerator instruction value to 0 when the non-travel mode is selected.

6. An apparatus according to any one of claims 2 to 5, wherein the output instruction value determining means (34) is adapted to determine the output instruction value of the prime mover based on the operation mode selected by said shift lever (12).

## Patentansprüche

1. Steuervorrichtung für ein Fahrzeug mit
einem Schalthebel (12) zum Auswählen einer Betriebsart mit einem Bewegungsmodus und einem Nichtbewegungsmodus; einer Gaspedalbetätigungsvorrichtung (14); einer Betriebsartdetektionseinrichtung (31) zur Detektion der durch den Schalthebel (12) ausgewählten Betriebsart; eine Detektionseinrichtung (32) für den Gaspedalbetätigungsbetrag zur Detektion eines Gaspedalbetätigungsbetrages durch die Gaspedalbetätigungsvorrichtung; eine Bestimmungseinrichtung (33) für den Gaspedalbefehlswert zum Bestimmen des Gaspedalbefehlswertes gestützt auf einer Differenz zwischen dem durch die Detektionseinrichtung (32) für den Gaspedalbetätigungsbetrag detektierten Gaspedalbetätigungsbetrag und einem Nullpunktswert, wenn der Bewegungsmodus ausgewählt wird; und einer Bestimmungseinrichtung (34) für den Ausgangsgrößenbefehlswert, die einen Ausgangsgrößenbefehlswert einer Antriebsmaschine gestützt auf dem Gaspedalbefehlswert bestimmt, der durch die Bestimmungseinrichtung (33) für den Gaspedalbefehlswert bestimmt wird, dadurch gekennzeichnet, daß die Bestimmungseinrichtung (33) für den Gaspedalbefehlswert eines Nullpunktswerteinstellungseinrichtung (35) aufweist zum Einstellen des Nullpunktswertes entsprechend dem Gaspedalbetätigungsbetrag, wenn die Betriebsart vom Nichtbewegungsmodus zum Bewegungsmodus geändert wird.

2. Vorrichtung nach Anspruch 1, wobei die Nullpunktswerteinstellungseinrichtung (35) den Nullpunkt auf die Summe des Gaspedalbetätigungsbetrages und eines Spiels desselben einstellt, wenn die ausgewählte Betriebsart der Nichtbewegungsmodus ist, und wenn die Betriebsart vom Nichtbewegungsmodus zum Bewegungsmodus geändert wird, den Nullpunktswert auf dem erhaltenen Wert hält.

3. Vorrichtung nach Anspruch 1 oder 2, wobei die Nullpunktswerteinstellungseinrichtung (35) den Nullpunktswert entsprechend dem Gaspedalbetätigungsbetrag einstellt, wenn die ausgewählte Betriebsart der Bewegungsmodus ist und die Summe des Gaspedalbetätigungsbetrages und des Spiels kleiner als der Nullpunktswert wird.

4. Vorrichtung nach Anspruch 1, 2 oder 3, wobei die Antriebsmaschine ein Motor ist und die Bestimmungseinrichtung (34) für den Ausgangsgrößenbefehlswert einen Befehlswert für den elektrischen Strom des Motors gestützt auf die durch den Schalthebel (12) ausgewählte Betriebsart und den durch die Bestimmungseinrichtung (33) für den Gaspedalbefehlswert bestimmten Gaspedalbefehlswert bestimmt.

5. Vorrichtung nach einem der Ansprüche 2 bis 4, wobei die Bestimmungseinrichtung (33) für den Gaspedalbefehlswert angepaßt ist, einen Gaspedalbefehlswert unbedingt auf 0 zu setzen, wenn der Nichtbewegungsmodus ausgewählt ist.

6. Vorrichtung nach einem der Ansprüche 2 bis 5, wobei die Bestimmungseinrichtung (34) für den Ausgangsgrößenbefehlswert angepaßt ist, den Ausgangsgrößenbefehlswert der Antriebsmaschine gestützt auf die durch den Schalthebel (12) ausgewählte Betriebsart zu bestimmen.

## Revendications

1. Dispositif de commande pour véhicule, comprenant :
un levier de changement (12) servant à sélectionner un mode de fonctionnement parmi un mode circulation et un mode non-circulation ; un dispositif d'actionnement (14) d'accélérateur ; un moyen de détection (31) de mode de fonctionnement servant à détecter le mode de fonctionnement sélectionné par ledit levier de changement (12); un moyen de détection (32) de course d'actionnement d'accélérateur servant à détecter une course d'actionnement d'accélérateur provoquée par ledit dispositif d'actionnement d'accélérateur; un moyen de détermination (33) de valeur d'instruction pour accélérateur servant à déterminer la valeur d'une instruction fournie à l'accélérateur d'après une différence entre la course d'actionnement d'accélérateur détectée par ledit moyen de détection (32) de course d'actionnement d'accélérateur et une valeur de point zéro lorsque le mode circulation est sélectionné ; et un moyen de détermination (34) de valeur d'instruction de sortie servant à déterminer une valeur d'instruction de sortie d'une machine motrice à partir de la valeur d'instruction pour accélérateur déterminée par ledit moyen de détermination (33) de valeur d'instruction pour accélérateur, caractérisé en ce que ledit moyen de détermination (33) de valeur d'instruction pour accélérateur comporte un moyen d'établissement (35) de valeur de point zéro servant à établir ladite valeur de point zéro d'après ladite course d'actionnement d'accélérateur lorsqu'on fait passer ledit mode de fonctionnement du mode non-circulation au mode circulation.

2. Dispositif selon la revendication 1, dans lequel ledit moyen d'établissement (35) de valeur de point zéro établit la valeur de point zéro à la somme de la course d'actionnement d'accélérateur et d'un jeu de celle-ci lorsque le mode de fonctionnement sélectionné est le mode non-circulation, et, lorsque le mode de fonctionnement par du mode non-circulation au mode circulation, maintient la valeur de point zéro à la valeur obtenue.

3. Dispositif selon la revendication 1 ou 2, dans lequel ledit moyen d'établissement (35) de valeur de point zéro établit la valeur de point zéro en fonction de ladite course d'actionnement d'accélérateur lorsque le mode de fonctionnement sélectionné est le mode circulation et la somme de la course d'actionnement d'accélérateur et du jeu dévient inférieure à la valeur de point zéro.

4. Dispositif selon la revendication 1, 2 ou 3, dans lequel ladite machine motrice est un moteur et ledit moyen de détermination (34) de valeur d'instruction de sortie détermine une valeur d'instruction de courant électrique dudit moteur d'après le mode de fonctionnement sélectionné par ledit levier de changement (12) et la valeur d'instruction pour accélérateur déterminée par ledit moyen de détermination (33) de valeur d'instruction pour accélérateur.

5. Dispositif selon l'une quelconque des revendications 2 à 4, dans lequel le moyen de détermination (33) de valeur d'instruction pour accélérateur est apte à établir sans conditions à 0 une valeur d'instruction pour accélérateur lorsque le mode non-circulation est sélectionné.

6. Dispositif selon l'une quelconque des revendications 2 à 5, dans lequel le moyen de détermination (34) de valeur d'instruction de sortie est apte à déterminer la valeur d'instruction de sortie de la machine motrice d'après le mode de fonctionnement sélectionné par ledit levier de changement (12).
